# EUROPEAN PATENT APPLICATION

(11) **EP 4 378 785 A1**
(43) Date of publication of application: **05.06.2024**
(21) Application number: 23822219.4
(22) Date of filing: 11.10.2023
(51) Int. Cl.: B60W 30/18

(54) **DRIVING TORQUE CONTROL METHOD AND SYSTEM FOR VEHICLE, AND RELATED APPARATUSES AND VEHICLE**

(30) Priority: 18.10.2022 CN 202211271482
(71) Applicant: Nio Technology (Anhui) Co., Ltd, Hefei, Anhui 230601 (CN)
(72) Inventor: XIE, Jun, Hefei, Anhui 230601 (CN); LIU, Ze, Hefei, Anhui 230601 (CN); ZHANG, Hongchao, Hefei, Anhui 230601 (CN); XIAO, Bohong, Hefei, Anhui 230601 (CN)
(74) Representative: Dr. Solf & Zapf Patent- und Rechtsanwalts PartG mbB
(86) International application number: PCT/CN2023/123895
(87) International publication number: WO 2024/083005

(57) **Abstract**

The disclosure provides a vehicle driving torque control method and system, a computer-readable storage medium, a computer device, and a vehicle. The method comprises: determining a total driving torque according to a stroke that a driver steps on an accelerator pedal, and dividing the total driving torque into a theoretical front-axle driving torque and a theoretical rear-axle driving torque; acquiring a minimum torque in a first torque set as a maximum front-axle driving torque, and acquiring a minimum torque in a second torque set as a maximum rear-axle driving torque; and limiting the theoretical front-axle driving torque according to the maximum front-axle driving torque, and limiting the theoretical rear-axle driving torque according to the maximum rear-axle driving torque, to obtain a final output actual front-axle driving torque and a final output actual rear-axle driving torque.

## Description

### TECHNICAL FIELD

The disclosure relates to the technical field of vehicle driving control, and in particular to a vehicle driving torque control method, a vehicle driving torque control system, a computer-readable storage medium, a computer device, and a vehicle.

### BACKGROUND

When a vehicle travels sideways, that is, when the vehicle travels with uneven load distribution between the left and right sides, load transfer occurs between the left and right sides of the vehicle, resulting in different vertical loads on tires on the two sides, and thereby causing different maximum limits of adhesion that can be provided by the tires on the left and right sides. Moreover, due to the existence of an open differential between left and right side wheels, an output torque of a left-side axle is equal to an output torque of a right-side axle, and a speed of the wheel on the side with a smaller vertical load is greater than that of the wheel on the side with a larger vertical load, so that there is a wheel speed difference between the tires on the left and right sides.

When the vehicle travels at the lateral limit in a venue with a low coefficient of adhesion, for example, a racetrack, if the torque output capacity of an electric motor breaks through the limit of adhesion of the tire on the side with the smaller vertical load, it will lead to skidding of the tire on the side. In the case of a traction control system being turned off or failing, the wheel speed difference between the ties on the left and right sides will rise rapidly, and the tire will skid violently, so that there may be the risk of the damage to a differential, thereby affecting the safety and handling stability of the vehicle.

For such an operating condition, a common control method currently used in a vehicle is to protect a differential by reducing a wheel speed difference by means of unilateral wheel braking, but this may lead to problems such as a brake pad being worn out too quickly and brake thermal decay occurring, thereby increasing the cost of use of the vehicle and decreasing driving safety.

### SUMMARY

One aspect of the disclosure is to solve the technical problem of how to reduce a wheel speed difference when a vehicle travels sideways without affecting the performance of a braking system, so as to prevent the damage to a differential.

In addition, other aspects of the disclosure also aim to solve or alleviate other technical problems existing in the prior art.

The disclosure provides a vehicle driving torque control method and system, a computer-readable storage medium, a computer device, and a vehicle. In particular, according to one aspect of the disclosure,
a vehicle driving torque control method is provided. The method comprises:
determining a total driving torque according to a stroke that a driver steps on an accelerator pedal, and dividing the total driving torque into a theoretical front-axle driving torque and a theoretical rear-axle driving torque;
acquiring a minimum torque in a first torque set as a maximum front-axle driving torque, and acquiring a minimum torque in a second torque set as a maximum rear-axle driving torque; and
limiting the theoretical front-axle driving torque according to the maximum front-axle driving torque, and limiting the theoretical rear-axle driving torque according to the maximum rear-axle driving torque, to obtain a final output actual front-axle driving torque and a final output actual rear-axle driving torque,
wherein the first torque set comprises at least a front-axle differential limiting torque correlated to a front-wheel speed difference, and the second torque set comprises at least a rear-axle differential limiting torque correlated to a rear-wheel speed difference.

Optionally, according to an embodiment of the disclosure, the limiting the theoretical front-axle driving torque and the theoretical rear-axle driving torque comprises:
comparing the theoretical front-axle driving torque with the maximum front-axle driving torque, and taking the smaller value as the actual front-axle driving torque; and
comparing the theoretical rear-axle driving torque and the maximum rear-axle driving torque, and taking the smaller value as the actual rear-axle driving torque.

Optionally, according to an embodiment of the disclosure, the front-axle differential limiting torque is a maximum front-axle differential torque obtained based on the front-wheel speed difference and a preset front-wheel torque limiting reference profile; and
the rear-axle differential limiting torque is a maximum rear-axle differential torque obtained based on the rear-wheel speed difference and a preset rear-wheel torque limiting reference profile, wherein
the front-wheel torque limiting reference profile is correlated to a front-axle differential life, and the rear-wheel torque limiting reference profile is correlated to a rear-axle differential life.

Optionally, according to an embodiment of the disclosure, the front-axle differential limiting torque is obtained by adjusting the maximum front-axle differential torque according to a first calibration adjustment parameter; and
the rear-axle differential is obtained by adjusting the maximum rear-axle differential torque according to a second calibration adjustment parameter, wherein
the first calibration adjustment parameter and the second calibration adjustment parameter are correlated to a current operating condition of a vehicle.

Optionally, according to an embodiment of the disclosure, when a vehicle is in an abnormal steering state, the first torque set further comprises a vehicle abnormal steering state limiting torque, the vehicle abnormal steering state limiting torque being either an understeer limiting torque or an oversteer limiting torque depending on the abnormal steering state of the vehicle.

Optionally, according to an embodiment of the disclosure, acquiring the vehicle steering state limiting torque by
determining whether the vehicle is in understeer or oversteer when the vehicle is in the abnormal steering state;
when the vehicle is in understeer, obtaining the understeer limiting torque from a lookup table based on the difference between an actual steering wheel angle and a steady steering wheel angle at the current moment; and
when the vehicle is in oversteer, obtaining the oversteer limiting torque from a lookup table based on the difference between an ideal yaw angular velocity and an actual yaw angular velocity at the current moment.

Optionally, according to an embodiment of the disclosure, the first torque set further comprises a maximum front-axle electric motor driving torque which is obtained from a lookup table of a front-axle electric motor external characteristic profile, and the second torque set further comprises a maximum rear-axle electric motor driving torque which is obtained from a lookup table of a rear-axle electric motor external characteristic profile.

According to another aspect of the disclosure, the disclosure provides a vehicle driving torque control system for performing a vehicle driving torque control method as described above, wherein the system comprises:
a distribution module configured to determine a total driving torque according to a stroke that a driver steps on an accelerator pedal, and divide the total driving torque into a theoretical front-axle driving torque and a theoretical rear-axle driving torque;
a calculation module configured to acquire a first torque set and obtain a minimum torque in the first torque set as a maximum front-axle driving torque, and acquire a second torque set and obtain a minimum torque in the second torque set as a maximum rear-axle driving torque; and
a comparison module configured to limit the theoretical front-axle driving torque and the theoretical rear-axle driving torque according to the maximum front-axle driving torque and the maximum rear-axle driving torque, and output an actual front-axle driving torque and an actual rear-axle driving torque,
wherein the first torque set comprises a front-axle differential limiting torque which is correlated to a front-wheel speed difference, and the second torque set comprises a rear-axle differential limiting torque which is correlated to a rear-wheel speed difference.

According to still another aspect of the disclosure, the disclosure provides a computer-readable storage medium having a computer program stored thereon, wherein the computer program, when executed by a processor, implements a vehicle driving torque control method as described above.

According to yet another aspect of the disclosure, the disclosure provides a computer device, comprising a memory, a processor, and a computer program stored on the memory and executable on the processor, wherein the computer program, when executed by the processor, implements a vehicle driving torque control method as described above.

According to still yet another aspect of the disclosure, the disclosure provides a vehicle, comprising a vehicle driving torque control system as described above.

Benefits of the disclosure are as follows: a speed difference is adjusted by means of limiting a driving torque without the need for unilateral wheel braking, so that the performance of a braking system cannot be affected. The maximum torque that a differential can bear for different wheel speed differences, the torque limiting in an abnormal steering state and the maximum torque of an electric motor are taken into account while limiting the driving torque, thereby improving the safety and handling stability of a high-power electric vehicle.

### BRIEF DESCRIPTION OF DRAWINGS

The above and other features of the disclosure will become apparent with reference to the accompany drawings, in which:
FIG. 1 shows a schematic flowchart of a vehicle driving torque control method according to an embodiment of the disclosure; and
FIG. 2 shows a schematic structural diagram of a vehicle driving torque control system according to an embodiment of the disclosure.

### DESCRIPTION OF EMBODIMENTS

It can be readily understood that according to the technical solution of the disclosure, those of ordinary skill in the art may propose a plurality of interchangeable structures and implementations without changing the essential spirit of the disclosure. Therefore, the following specific embodiments and the accompanying drawings are merely exemplary descriptions of the technical solutions of the disclosure, and should not be construed as the entirety of the disclosure or construed as limiting the technical solution of the disclosure.

Orientation terms, such as up, down, left, right, front, rear, front side, back side, top, and bottom, which are or may be mentioned in this description, are defined with respect to the structures shown in the accompanying drawing, and are relative concepts, and therefore may correspondingly vary depending on different positions and different usage states. Therefore, these or other orientation terms should not be construed as restrictive terms as well. Moreover, the terms such as "first" "second", "third" or similar expressions are only used for description and distinction purposes, and should not be construed as indicating or implying the relative importance of corresponding members.

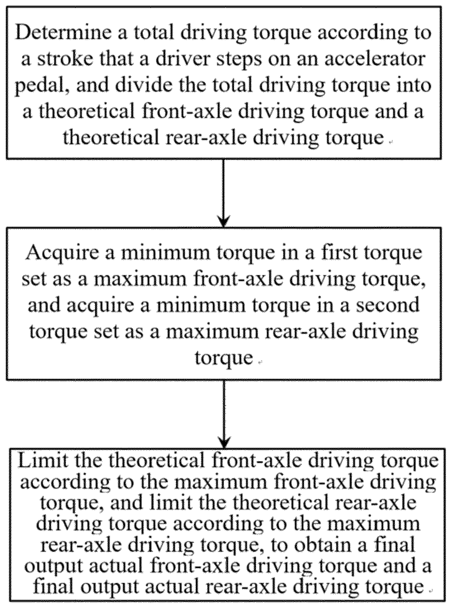

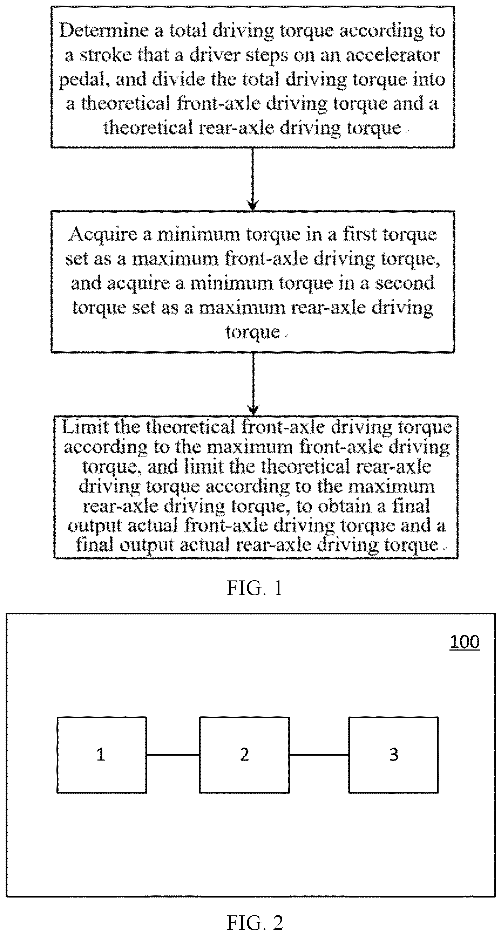

Reference is made to FIG. 1, which shows a schematic flowchart of a vehicle driving torque control method according to an embodiment of the disclosure. The vehicle driving torque control method of the disclosure comprises:
determining a total driving torque according to a stroke that a driver steps on an accelerator pedal, and dividing the total driving torque into a theoretical front-axle driving torque and a theoretical rear-axle driving torque;
acquiring a first torque set and obtaining a minimum torque in the first torque set as a maximum front-axle driving torque, and acquiring a second torque set and obtaining a minimum torque in the second torque set as a maximum rear-axle driving torque; and
limiting the theoretical front-axle driving torque and the theoretical rear-axle driving torque according to the maximum front-axle driving torque and the maximum rear-axle driving torque, to obtain a final output actual front-axle driving torque and a final output actual rear-axle driving torque,
wherein the first torque set comprises a front-axle differential limiting torque which is correlated to a front-wheel speed difference, and the second torque set comprises a rear-axle differential limiting torque which is correlated to a rear-wheel speed difference.

The vehicle driving torque control method of the disclosure utilizes a method of limiting an extreme value, and in particular a maximum value, to limit the front-axle and rear-axle driving torques of a vehicle. The method is in particular used for an electric vehicle having electric motors on both front and rear axles. First, the total driving torque required by the vehicle is determined according to an accelerator pedal signal given by the driver, and then the total driving torque is distributed to the front and rear axles to obtain the front-axle and rear-axle driving torques. The step is performed by a distribution module in a drive force control system. The distributed front-axle and rear-axle drive forces are only the theoretical front-axle and rear-axle driving torques, but not the final output actual front-axle and rear-axle driving torques.

The maximum front-axle and rear-axle driving torques for limiting the theoretical front-axle and rear-axle driving torques are obtained by calculating the minimum torque in the torque set. Here, all torques included in the torque set are limiting torques for a driving torque, that is, the driving torque should not exceed any one of the torques included in the torque set. By means of obtaining the minimum one of the torques in the torque set and limiting the driving torque using the minimum torque, it is possible to take into account a variety of influencing factors, including an electric motor, steering characteristics and a differential. For the front axle, the first torque set is first acquired, and the torques in the first torque set are limiting torques correlated to the driving torque of the front axle; and then, the minimum torque in the first torque set is obtained as the maximum front-axle driving torque. For the rear axle, the second torque set including limiting torques correlated to the driving torque of the rear axle is first acquired, and the minimum torque in the second torque set is obtained as the maximum rear-axle driving torque. The first torque set comprises a front-axle differential limiting torque correlated to a front-wheel speed difference, or as a function of an absolute value of the front-wheel speed difference. The second torque set comprises a rear-axle differential limiting torque correlated to a rear-wheel speed difference, or as a function of an absolute value of the rear-wheel speed difference.

In an embodiment of the disclosure, after the maximum front-axle and rear-axle driving torques are obtained, the theoretical front-axle driving torque is compared with the maximum front-axle driving torque, and the smaller value is taken as the actual front-axle driving torque, and the theoretical rear-axle driving torque is compared with the maximum rear-axle driving torque, and the smaller value is taken as the actual rear-axle driving torque. Taking the smaller value in the torque set as the maximum limit for the driving torque ensures that the driving torque does not exceed any of the torques in the torque set, so that the limits of all the torques in the torque set can be satisfied.

In an embodiment of the disclosure, the front-axle differential limiting torque is a maximum front-axle differential torque obtained based on the front-wheel speed difference and a preset front-wheel torque limiting reference profile. The rear-axle differential limiting torque is a maximum rear-axle differential torque obtained based on the rear-wheel speed difference and a preset rear-wheel torque limiting reference profile. The front-wheel torque limiting reference profile is obtained by bench tests based on the durability requirements and service life of the entire vehicle and a differential, the input of which is the absolute value of the front-wheel speed difference ΔnF, and the output of which is the maximum front-axle differential torque TdF, i.e., a maximum torque that a front-axle differential is able to carry for different front-wheel speed differences ΔnF under the durability requirements of the entire vehicle and the front-axle differential. The rear-wheel torque limiting reference profile is obtained by bench tests based on the durability requirements and service life of the entire vehicle and a rear-axle differential, the input of which is the absolute value of the rear-wheel speed difference ΔnR, and the output of which is the maximum rear-axle differential torque TdR, i.e., a maximum torque that the rear-axle differential is able to carry for different rear-wheel speed differences ΔnR under the durability requirements of the entire vehicle and the rear-axle differential.

According to an embodiment of the disclosure, the front-axle differential limiting torque is obtained by adjusting the maximum front-axle differential torque according to a first calibration adjustment parameter; the rear-axle differential limiting torque is obtained by adjusting the maximum rear-axle differential torque according to a second calibration adjustment parameter; and the first calibration adjustment parameter K1 and the second calibration adjustment parameter K2 are correlated to a current operating condition of the vehicle.

In an embodiment of the disclosure, the first calibration adjustment parameter K1 corresponds to the proportion of the maximum front-axle differential torque TdF that needs to be adjusted under different vehicle operating conditions, that is, the correction proportion of the front-wheel torque limiting reference profile corresponding to the current operating condition of the entire vehicle, and by means of K1, the maximum front-axel differential torque that meets the durability requirements can be adjusted according to the actual performance of the vehicle. The limiting of the maximum front-axle differential torque of the vehicle under different road surfaces and operating conditions can be adjusted by means of changing the value of K1, wherein K1 is also obtained by means of simulating different operating conditions by bench tests. The principle of the second calibration adjustment parameter K2 corresponds to that of the first calibration adjustment parameter K1 described above, and will not be repeated here.

By means of the torque limiting described above, the maximum torque of the differential can be determined according to different speed differences and the driving torque can be limited by the maximum torque, such that the excessive wheel speed difference or the excessive torque borne by the differential can be prevented as much as possible, and thus the damage to the differential due to the excessive speed difference and the excessive torque can be prevented, and the maximum torque of the differential can be limited for different operating conditions by means of the introduction of the calibration adjustment parameters, thereby protecting the differential for the different operating conditions.

In an embodiment of the disclosure, the front-axle differential limiting torque is the product of the maximum front-axle differential torque and the first calibration adjustment parameter, and the rear-axle differential limiting torque is the product of the maximum rear-axle differential torque and the second calibration adjustment parameter. Of course, the way of adjusting the maximum torque of the differential by means of the calibration adjustment parameter is not limited to using the way of product, but may also use other arithmetic or limiting ways.

According to an embodiment of the disclosure, when the vehicle is in an abnormal steering state, the first torque set further comprises a vehicle abnormal steering state limiting torque, which is either an understeer limiting torque Tuslim or an oversteer limiting torque Toslim depending on the abnormal steering state of the vehicle. When the vehicle is in the abnormal steering state, i.e., in understeer or oversteer, the vehicle can compensate for the two abnormal steering states by means of adjusting the driving torque, thereby improving the handling stability of the vehicle. Moreover, the understeer limiting torque Tuslim or the oversteer limiting torque Toslim is a maximum driving torque that enables the abnormal steering state to be compensated in understeer or oversteer, and if the driving torque of the vehicle exceeds the understeer limiting torque or the oversteer limiting torque, the abnormal steering state of the vehicle may be exacerbated, thereby affecting the handling stability of the vehicle. Therefore, by means of limiting the driving torque by the vehicle abnormal steering state limiting torque, it is possible to take into account the steering characteristics of the vehicle while adjusting the driving torque, thereby improving the handling stability of the vehicle when steering.

The vehicle steering state limiting torque is acquired by
determining whether the vehicle is in understeer or oversteer when the vehicle is in the abnormal steering state;
when the vehicle is in understeer, obtaining the understeer limiting torque Tuslim from a lookup table based on the difference between an actual steering wheel angle and a steady steering wheel angle at the current moment; and
when the vehicle is in oversteer, obtaining the oversteer limiting torque Toslim from a lookup table based on the difference between an ideal yaw angular velocity and an actual yaw angular velocity at the current moment.

In an embodiment of the disclosure, the first torque set further comprises a maximum front-axle electric motor driving torque TFmlim, and the second torque set further comprises a maximum rear-axle electric motor driving torque TRmlim. The torques distributed to the front and rear axles are respectively limited by the maximum front-axle electric motor driving torque TFmlim and the maximum rear-axle electric motor driving torque TRmlim. The maximum front-axle electric motor driving torque TFmlim and the maximum rear-axle electric motor driving torque TRmlim are respectively obtained from lookup tables of front-axle and rear-axle electric motor external characteristic profiles. In this way, the driving torques of the front and rear axles are limited to not exceeding the maximum front-axle and rear-axle electric motor driving torques, thereby preventing the damage to electric motors of the front and rear axles due to overload.

A second aspect of the disclosure further proposes a vehicle driving torque control system. Reference is made to FIG. 2, which shows a schematic structural diagram of a vehicle driving torque control system 100 according to an embodiment of the disclosure. The system 100 comprises:
a distribution module 1 configured to determine a total driving torque according to a stroke that a driver steps on an accelerator pedal, and divide the total driving torque into a theoretical front-axle driving torque and a theoretical rear-axle driving torque;
a calculation module 2 configured to acquire a first torque set and obtain a minimum torque in the first torque set as a maximum front-axle driving torque, and acquire a second torque set and obtain a minimum torque in the second torque set as a maximum rear-axle driving torque; and
a comparison module 3 configured to limit the theoretical front-axle driving torque and the theoretical rear-axle driving torque according to the maximum front-axle driving torque and the maximum rear-axle driving torque, and output an actual front-axle driving torque and an actual rear-axle driving torque,
wherein the first torque set comprises a front-axle differential limiting torque which is correlated to a front-wheel speed difference, and the second torque set comprises a rear-axle differential limiting torque which is correlated to a rear-wheel speed difference.

In an embodiment of the disclosure, the comparison module 3 compares the theoretical front-axle driving torque and the maximum front-axle driving torque, and takes the smaller value as the actual front-axle driving torque; and the comparison module compares the theoretical rear-axle driving torque and the maximum rear-axle driving torque, and takes the smaller value as the actual rear-axle driving torque.

In an embodiment of the disclosure, the front-axle differential limiting torque is the product of the maximum front-axle differential torque obtained from a lookup table of the front-wheel torque limiting reference profile based on the front-wheel speed difference and a first calibration adjustment parameter for the torque limiting reference profile, and the rear-axle differential limiting torque is the product of the maximum rear-axle differential torque obtained from a lookup table of the rear-wheel torque limiting reference profile based on the rear-wheel speed difference and a second calibration adjustment parameter for the torque limiting reference profile.

According to an embodiment of the disclosure, when a vehicle is in an abnormal steering state, the first torque set further comprises a vehicle abnormal steering state limiting torque, the vehicle abnormal steering state limiting torque being either an understeer limiting torque or an oversteer limiting torque depending on the abnormal steering state of the vehicle.

In an embodiment of the disclosure, the calculation module 2 calculates the vehicle steering state limiting torque by
determining whether the vehicle is in understeer or oversteer when the vehicle is in the abnormal steering state;
when the vehicle is in understeer, obtaining the understeer limiting torque from a lookup table based on the difference between an actual steering wheel angle and a steady steering wheel angle at the current moment; and
when the vehicle is in oversteer, obtaining the oversteer limiting torque from a lookup table based on the difference between an ideal yaw angular velocity and an actual yaw angular velocity at the current moment.

In an embodiment of the disclosure, the first torque set further comprises a maximum front-axle electric motor driving torque, the calculation module obtains the maximum front-axle electric motor driving torque from a lookup table of a front-axle electric motor external characteristic profile; and the second torque set further comprises a maximum rear-axle electric motor driving torque, and the calculation module obtains the maximum rear-axle electric motor driving torque from a lookup table of a rear-axle electric motor external characteristic profile.

In the description of the disclosure, control modules, such as a "distribution module", a "calculation module", may comprise hardware, software or a combination thereof. A module may comprise a hardware circuit, various suitable sensors, a communication port, and a memory, or may comprise a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that may store program codes, for example, a magnetic disk, a hard disk, an optical disc, a flash memory, a read-only memory, or a random access memory.

Further, it should be understood that, since the configuration of the control module is merely used for describing functional units of the system corresponding to the vehicle driving torque control method in the disclosure, a physical device corresponding to the control module may be a processor itself, or part of software, part of hardware, or part of a combination of software and hardware in the processor. Therefore, there being one control module is merely exemplary. It can be understood by those skilled in the art that the control module may be adaptively split based on actual conditions. A specific split form of the control module does not cause the technical solutions to depart from the principle of the disclosure. Therefore, all technical solutions after the split shall fall within the scope of protection of the disclosure.

A third aspect of the disclosure provides a computer-readable storage medium having a computer program stored thereon, wherein the computer program, when executed by a processor, implements a vehicle driving torque control method as described above.

It can be understood that the computer-readable storage medium has all technical effects of the vehicle driving torque control method as described above, which will not be repeated here.

A fourth aspect of the disclosure provides a computer device, comprising a memory and a processor, wherein the memory is adapted to store a plurality of program codes, and the program codes are adapted to be loaded and run by the processor to perform a vehicle driving torque control method as described above.

It can be understood that the computer device has all technical effects of the vehicle driving torque control method as described above, which will not be repeated here. The computer device may comprise a control device formed by various electronic devices.

Those skilled in the art can understand that in the disclosure, some or all of the procedures of the vehicle driving torque control method may be implemented by a computer program instructing relevant hardware. The computer program may be stored in a computer-readable storage medium. The computer program, when executed by a processor, may implement the steps of the foregoing method embodiments. The computer program comprises a computer program code, and it can be understood that the program code comprises, but is not limited to, a program code for executing the vehicle driving torque control method as described above. For ease of description, only the parts related to the disclosure are shown. The computer program code may be in the form of source code, object code, executable file, or some intermediate forms. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not comprise an electric carrier signal and a telecommunications signal.

A fifth aspect of the disclosure provides a vehicle, comprising a vehicle driving torque control system as described above.

It should be understood that the vehicle driving torque control system of the disclosure may be mounted on various vehicles, including cars, vans, buses, hybrid vehicles, battery electric vehicles, and so on. Therefore, the subject matter of the disclosure further aims to set forth various vehicles provided with the vehicle driving torque control system according to the disclosure.

It should be understood that all of the above preferred embodiments are exemplary rather than limiting, and any modification or variation made by those skilled in the art to the specific embodiments described above without departing from the concept of the disclosure shall fall within the scope of legal protection of the disclosure.

## Claims

1. A vehicle driving torque control method, comprising:
determining a total driving torque according to a stroke that a driver steps on an accelerator pedal, and dividing the total driving torque into a theoretical front-axle driving torque and a theoretical rear-axle driving torque;
acquiring a minimum torque in a first torque set as a maximum front-axle driving torque, and acquiring a minimum torque in a second torque set as a maximum rear-axle driving torque; and
limiting the theoretical front-axle driving torque according to the maximum front-axle driving torque, and limiting the theoretical rear-axle driving torque according to the maximum rear-axle driving torque, to obtain a final output actual front-axle driving torque and a final output actual rear-axle driving torque,
wherein the first torque set comprises at least a front-axle differential limiting torque correlated to a front-wheel speed difference, and the second torque set comprises at least a rear-axle differential limiting torque correlated to a rear-wheel speed difference.

2. The vehicle driving torque control method according to claim 1, wherein the limiting the theoretical front-axle driving torque and the theoretical rear-axle driving torque comprises:
comparing the theoretical front-axle driving torque with the maximum front-axle driving torque, and taking the smaller value as the actual front-axle driving torque; and
comparing the theoretical rear-axle driving torque with the maximum rear-axle driving torque, and taking the smaller value as the actual rear-axle driving torque.

3. The vehicle driving torque control method according to claim 1, wherein the front-axle differential limiting torque is a maximum front-axle differential torque obtained based on the front-wheel speed difference and a preset front-wheel torque limiting reference profile; and
the rear-axle differential limiting torque is a maximum rear-axle differential torque obtained based on the rear-wheel speed difference and a preset rear-wheel torque limiting reference profile; and wherein
the front-wheel torque limiting reference profile is correlated to a front-axle differential life, and the rear-wheel torque limiting reference profile is correlated to a rear-axle differential life.

4. The vehicle driving torque control method according to claim 3, wherein the front-axle differential limiting torque is obtained by adjusting the maximum front-axle differential torque according to a first calibration adjustment parameter; and
the rear-axle differential limiting torque is obtained by adjusting the maximum rear-axle differential torque according to a second calibration adjustment parameter; and wherein
the first calibration adjustment parameter and the second calibration adjustment parameter are correlated to a current operating condition of a vehicle.

5. The vehicle driving torque control method according to claim 1, wherein when a vehicle is in an abnormal steering state, the first torque set further comprises a vehicle abnormal steering state limiting torque, the vehicle abnormal steering state limiting torque being either an understeer limiting torque or an oversteer limiting torque depending on the abnormal steering state of the vehicle.

6. The vehicle driving torque control method according to claim 5, wherein acquiring the vehicle steering state limiting torque by
determining whether the vehicle is in understeer or oversteer when the vehicle is in the abnormal steering state;
when the vehicle is in understeer, obtaining the understeer limiting torque from a lookup table based on the difference between an actual steering wheel angle and a steady steering wheel angle at the current moment; and
when the vehicle is in oversteer, obtaining the oversteer limiting torque from a lookup table based on the difference between an ideal yaw angular velocity and an actual yaw angular velocity at the current moment.

7. The vehicle driving torque control method according to claim 1, wherein the first torque set further comprises a maximum front-axle electric motor driving torque which is obtained from a lookup table of a front-axle electric motor external characteristic profile, and the second torque set further comprises a maximum rear-axle electric motor driving torque which is obtained from a lookup table of a rear-axle electric motor external characteristic profile.

8. A vehicle driving torque control system (100) for performing a vehicle driving torque control method according to any one of claims 1 to 7, wherein the system comprises:
a distribution module (1) configured to determine a total driving torque according to a stroke that a driver steps on an accelerator pedal, and divide the total driving torque into a theoretical front-axle driving torque and a theoretical rear-axle driving torque;
a calculation module (2) configured to acquire a first torque set and obtain a minimum torque in the first torque set as a maximum front-axle driving torque, and acquire a second torque set and obtain a minimum torque in the second torque set as a maximum rear-axle driving torque; and
a comparison module (3) configured to limit the theoretical front-axle driving torque and the theoretical rear-axle driving torque according to the maximum front-axle driving torque and the maximum rear-axle driving torque, and output an actual front-axle driving torque and an actual rear-axle driving torque,
wherein the first torque set comprises a front-axle differential limiting torque which is correlated to a front-wheel speed difference, and the second torque set comprises a rear-axle differential limiting torque which is correlated to a rear-wheel speed difference.

9. A computer-readable storage medium having a computer program stored thereon, wherein the computer program, when executed by a processor, implements a vehicle driving torque control method according to any one of claims 1 to 7.

10. A computer device, comprising a memory, a processor, and a computer program stored on the memory and executable on the processor, wherein the computer program, when executed by the processor, implements a vehicle driving torque control method according to any one of claims 1 to 7.

11. A vehicle, comprising a vehicle driving torque control system (100) according to claim 8.
